# EUROPÄISCHE PATENTSCHRIFT

(11) **EP 0 818 263 B1**
(45) Veröffentlichungstag und Bekanntmachung des Hinweises auf die Patenterteilung: **11.04.2001**
(21) Anmeldenummer: 97111116.6
(22) Anmeldetag: 03.07.1997
(51) Int. Cl.: B23B 51/02

(54) **Vollhartmetallbohrer**
Drill entirely made of hard metal
Foret réalisé entièrement en métal dur

(30) Priorität: 08.07.1996 DE 19627436
(43) Veröffentlichungstag der Anmeldung: 14.01.1998
(73) Patentinhaber: Günther & Co. GmbH, 60489 Frankfurt (DE)
(72) Erfinder: Schweighöfer, Günter, 63654 Büdingen (DE); Müller, Peter, 61352 Bad Homburg (DE)
(74) Vertreter: Weber, Dieter, Dr.

(56) Entgegenhaltungen:
- EP-A- 0 278 288
- DE-A- 3 628 262
- DE-U- 9 002 543
- FR-A- 2 639 565
- TOOLING AND PRODUCTION, Bd. 46, Nr. 12, März 1981, Seiten 70-75, XP002043251

## Beschreibung

Die vorliegende Erfindung betrifft einen Vollhartmetallbohrer mit mindestens zwei Schneiden und mindestens zwei Spannuten, die durch Stege voneinander getrennt sind, an deren Vorderende die Schneiden angeordnet sind, und mit einem durch den Bohrerdurchmesser und die radiale Spannuttiefe definierten Bohrerkern gemäss dem Oberbegriff des Anspruchs 1.

Derartige Vollhartmetallbohrer sind seit etwa zehn Jahren bekannt. Vollhartmetallbohrer zeichnen sich gegenüber konventionellen Bohrern aus Schnellarbeitsstahl dadurch aus, daß die Schnittgeschwindigkeit gegenüber den konventionellen Bohrern um das Drei- bis Fünffache gesteigert werden kann, wobei der Vorschub pro Bohrerumdrehung unverändert bleiben kann. Gleichzeitig haben diese Vollhartmetallbohrer im Vergleich zu konventionellen Bohrern aus Schnellarbeitsstahl noch einen geringeren Verschleiß, so daß bei der Verwendung von Vollhartmetallbohrern die Produktivität in Verbindung mit Bohrvorgängen erheblich gesteigert werden kann.

Daneben sind auch Bohrer bekannt, bei welchen lediglich an der Bohrerspitze befestigte Schneideinsätze aus Hartmetall bestehen, während der Bohrer im übrigen aus Stahl hergestellt ist. Diese haben jedoch den Nachteil, daß sie im Gegensatz zu Vollhartmetallbohrern nicht bzw. nur wenig nachschleifbar sind, d.h. die Schneideinsätze müssen nach entsprechendem Verschleiß ausgetauscht werden. Bei Bohrern mit festverlöteten Hartmetallplättchen ist dies ein sehr aufwendiger und im Regelfall nicht lohnender Vorgang. Die Bohrer, die mit Hilfe von Klemmvorrichtungen oder Schrauben gehaltene Schneidplatten aufweisen, sind dagegen vergleichsweise aufwendig und teuer. Außerdem sind die letztgenannten Bohrer auf größere Bohrerdurchmesser ab etwa 14 mm beschränkt, da austauschbare Hartmetallschneidplatten nicht beliebig klein hergestellt und dabei auch noch sicher an entsprechenden Bohrerspitzen befestigt werden können.

Vollhartmetallbohrer werden daher vor allem für kleine bis mittlere Bohrerdurchmesser, typischerweise im Bereich von 3 - 20 mm Nenndurchmesser, eingesetzt, wenn es auf hohe Produktivität und kostengünstigen Materialeinsatz ankommt. Dabei haben die Vollhartmetallbohrer gegenüber den Bohrern mit eingelöteten Schneidplatten den Vorteil, daß sie in relativ einfacher Weise nachgeschliffen werden können, wenn die Schneidkanten verschlissen sind.

Dennoch haben sich Vollhartmetallbohrer nicht in allen Bereichen durchsetzen können, in denen es auf hohe Produktivität und geringen Verschleiß bei der Herstellung von Bohrungen kleinen und mittleren Durchmessers ankommt. Insbesondere bei Bohrtiefen, die das Dreifache eines Bohrerdurchmessers übersteigen, wachsen bei den herkömmlichen Vollhartmetallbohrern die beim Bohren auftretenden statischen und dynamischen Schneidkräfte erheblich an, was sowohl die Qualität der Bohrungen herabsetzt als auch zum Bruch des Bohrers führen kann. Zwar läßt sich die Bohrtiefe noch etwas steigern, wenn man ein Kühl- bzw. Spülmittel an der Bohrerspitze zuführt, jedoch ist die Herstellung von Bohrern mit einer im Bohrerkern oder in den Stegen vorgesehenen, zentralen Spülmittelzufuhr sehr aufwendig, ein entsprechender Bohrer somit in der Anschaffung erheblich teurer kommt als ein Vollhartmetallbohrer ohne innere Spülmittelzuführung. Auch das konventionelle Bohren mit externer Spülmittelzufuhr, welches neben der internen Zufuhr das am weitesten verbreitete Bohrverfahren darstellt, erfordert Maßnahmen zum Auffangen und Entsorgen des Spülmittels.

Der wesentliche Grund für die mangelnde Eignung von Vollhartmetallbohrern bei größeren Bohrtiefen liegt vor allem in der Geometrie der Vollhartmetallbohrer begründet, die man bisher für notwendig hielt. Das Vollhartmetall ist relativ spröde, so daß man aus Gründen der Stabilität den Bohrerquerschnitt möglichst massiv ausgestaltet hat, d.h. sowohl der Bohrerkern als auch die die Spannuten trennenden Stege des Bohrers nahmen einen erheblichen Teil des Querschnittes in Anspruch. Da die Querschnittsform der Spannuten im wesentlichen unverändert belassen wurde, führte dies zu relativ kleinen Spannutquerschnitten.

Außerdem ist bei Vollhartmetallbohrern nach dem Stand der Technik der Drallwinkel, d.h. der in einer Abwinklung der Hüllfläche des Bohrers gemessene Winkel zwischen einer Spannut bzw. dem Rand einer Spannut und einer Parallelen zur Bohrerachse, relativ klein, um den Spanwinkel zwischen Spanfläche und einer Parallelen zur Bohrerachse im äußeren Bereich der Schneidkante, der dem Drallwinkel entspricht, möglichst klein zu halten, weil man ansonsten einen Bruch der Schneidkante in diesem Bereich befürchtete.

Der mit dieser Bohrergeometrie verbundene, schlechte Spantransport entlang der Spannuten ist in erster Linie dafür verantwortlich, daß die beim Bohren mit Vollhartmetallbohrern bei größeren Bohrtiefen auftretenden statischen und dynamischen Kräfte zu groß werden.

In der Zeitschrift "Tooling and Production" (Band 46, März 1981, Nr. 12, Solon, Ohio, USA) ist ein herkömmlicher Spiralbohrer aus Schnellarbeitsstahl gezeigt. Sowohl die FR 26 39 565 als auch die DE 36 28 262 zeigen Spiralbohrer aus Hartmetall, die einen großen Nutquerschnitt der Spannuten aufweisen und dem Oberbegriff des Anspruchs 1 entsprechen.

Gegenüber diesem Stand der Technik liegt der vorliegenden Erfindung die Aufgabe zugrunde, einen Vollhartmetallbohrer mit den eingangs genannten Merkmalen zu schaffen, der auch ohne Spülmittel für größere Bohrtiefen bis zum etwa Sieben- bis Achtfachen des Bohrerdurchmessers geeignet ist.

Diese Aufgabe wird dadurch gelöst, daß der minimale Krümmunasradius der konkaven Fläche mehr als 80% des Bohrerradius beträgt.

Überraschenderweise sind aufgrund der erfindungsgemäßen Merkmale und bevorzugten Ausgestaltungen Vollhartmetallbohrer nicht nur anstelle konventioneller Bohrer mit externer Kühl-und Spülmittelzufuhr in weiteren Anwendungsbereichen einsetzbar, sondern man kann in vielen Fällen sogar vollständig auf jede Spülmittelzufuhr verzichten und dennoch ohne weiteres Bohrtiefen bis zum 6- bis 8-fachen des Bohrerdurchmessers erreichen. Dies bringt nicht nur Vorteile hinsichtlich der Maschinenreinigung und der Entsorgung des verunreinigten Spül- und Kühlmittels, sondern ermöglicht auch den Einsatz einfacherer Maschinen anstelle der aufwendigen Maschinen mit interner Spülmittelzufuhr.

Der Drallwinkel eines solchen Bohrers beträgt zweckmäßigerweise mehr als 30° und vorzugsweise zwischen 35° und 55°, wobei der Bereich zwischen 35°und 45° für den Drallwinkel besonders bevorzugt ist. Die mit modernen Fertigungsmethoden hergestellten Hartmetalle haben sich dabei als ausreichend zäh erwiesen, um auch entsprechen große Spanwinkel im äußeren Bereich der Schneidkante zuzulassen. Insbesondere Sinterhartmetalle die aus gepulvertem Material mit einer Korngröße von weniger als 0,7 µm bestehen, haben sich überraschenderweise als genügend widerstandfähig erwiesen, um die erfindungsgemäße Bohrergeometrie zuzulassen. Die Korngröße des bei der Herstellung verwendeten Pulvermaterials sollte vorzugsweise 1 µm nicht übersteigen.

Der Öffnungswinkel der Spannuten, gemessen zwischen zwei Geraden, die sich von der Achse des Bohrers jeweils bis zu den beiden äußeren Rändern einer Spannut erstrecken, sollte mindestens 100°, vorzugsweise mindestens 110° und besonders bevorzugt zwischen 120° und 135° betragen. Dementsprechend schmal sind die die Spannuten trennenden Stege, für die dann, im Falle eines Bohrers mit zwei Schneiden und zwei Spannuten, nur noch ein Umfangswinkel (gemessen am Außenumfang des Bohrers) zwischen 45° und 80° verbleibt, wobei der bevorzugte Wert in der Größenordnung von 50° liegt. Diese in Umfangsrichtung relativ weit ausladenden Nuten ermöglichen es, daß trotz des relativ großen Gesamtquerschnitts der Spannuten der Kerndurchmesser immer noch ausreichend groß bleiben kann, um dem Bohrer eine ausreichende Stabilität zu geben. Vorzugsweise liegt der Kerndurchmesser in der Größenordnung von 30% des Bohrerdurchmessers, d.h. zwischen 27% und 33% des Bohrerdurchmessers. Die bevorzugten Merkmale des erfindungsgemäßen Bohrers definieren, ungeachtet einer noch näher zu beschreibenden genaueren Geometrie der Spannuten, näherungsweise die Form eines verdrillten Stabes mit rechteckigem Querschnitt und einem Verhältnis von Dicke zu Breite, welches etwa 30% beträgt. Konkret weicht die Querschnittsform in der bevorzugten Ausführungsform der Erfindung von dieser nahezu rechteckigen Querschnittsform durch leichte konvexe Ausbuchtungen der an die Freiflächen der Schneiden angrenzenden Nutflächen und durch eine leicht konkave Form der an die Spanflächen anschließenden Nutflächen ab.

Konkret weist in der bevorzugten Ausführungsform der Erfindung die Nut bzw. Nutgrund und Nutwände der Spannut eine in einem Schnitt senkrecht zur Achse konkave erste Fläche und eine zweite, mindestens teilweise konvexe Fläche auf, wobei der tiefste Punkt des Nutgrundes die beiden Flächen voneinander trennt. Dabei erstreckt sich der konvexe Teil der zweiten Fläche mindestens über die Hälfte und vorzugsweise über mehr als 60% der in einem Schnitt senkrecht zur Achse gemessenen Länge der zweiten Fläche. Die konkave erste Fläche hat einen minimalen Krümmungsradius, der mindestens 80% des Bohrerradius beträgt, wobei vorzugsweise der gesamte Krümmungsradius der konkaven Fläche größer ist als der Bohrerradius, d.h. die Nutwand zwischen dem tiefsten Punkt des Nutgrundes und dem äußeren Rand, die an die Spanfläche der Schneide anschließt, hat einen sehr flachen, konkaven Verlauf. Dagegen sind die Krümmungsradien des an den tiefsten Punkt des Nutgrundes anschließenden konkaven Abschnittes und des anschließenden konvexen Abschnittes der zweiten Fläche jeweils deutlich kleiner als der Radius des Bohrers.

Der Krümmungsradius des konkaven Abschnittes der teilweise konvexen Nutfläche. gemessen wiederum in einer Ebene senkrecht zur Bohrerachse, beträgt vorzugsweise weniger als 1/4 und zum Beispiel nur etwa ein fünftel oder ein sechstel des Krümmungsradius der nur konkaven Nutfläche.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen Querschnitt durch einen erfindungsgemäßen Bohrer,
- Figur 2: eine stirnseitige Ansicht auf die Spitze eines erfindungsgemäßen Bohrers,
- Figur 3: eine Seitenansicht eines erfindungsgemäßen Bohrers.
- Figur 4: das Ergebnis eines Bohrvergleichstestes zwischen einem konventionellen Vollhartmetallbohrer und einer Ausführungsform der vorliegenden Erfindung unter Verwendung eines Spülmittels, und
- Figur 5: das Ergebnis eines Bohrvergleichstestes unter denselben Bedingungen und zwischen denselben Bohrertypen wie im Falle der Figur 4, jedoch ohne Verwendung eines Spülmittels.

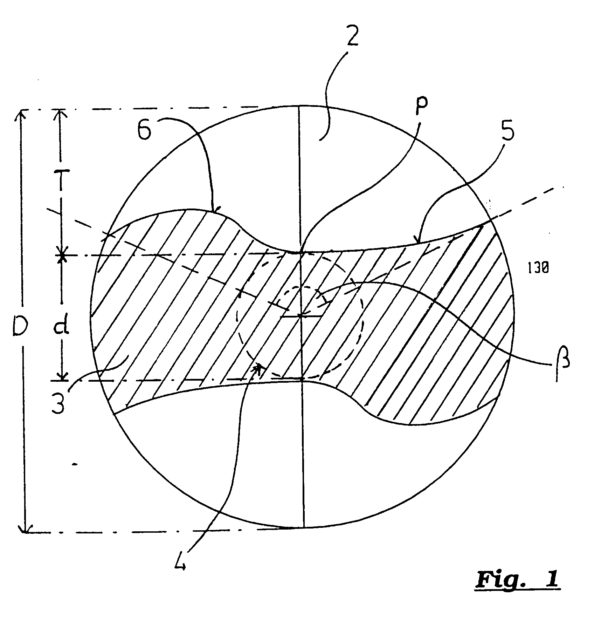

In Figur 1 erkennt man den Querschnitt eines Bohrers mit zwei Spannuten 2, die durch Stege 3 voneinander getrennt sind, wobei der minimale Abstand der gegenüberliegenden Spannuten 2 einen Kerndurchmesser d eines Bohrerkernes 4 definiert, an welchen sich die beiden Stege 3 einstückig anschließen. Der Bohrerkern ist also kein separates Teil des Bohrers, sondern lediglich definiert als gedachter, zentraler, zylindrischer Stab, der sich in den Bohrer einbeschreiben läßt.

Der Gesamtquerschnitt von Bohrerkern 4 und Stegen 3 läßt sich näherungsweise beschreiben durch kleine Abweichungen von einem flachen, rechteckigen Querschnitt mit einem Höhe zu Breite Verhältnis von 3 : 10, wobei punktsymmetrisch zum Zentrum, d.h. zur Bohrerachse, die Fläche 6 der Nutwand deutlich konvex ausgebaucht ist, während die Fläche 5 der Nutwand nur leicht konkav gewölbt von dem einfachen Rechteckprofil abweicht.

Im Ergebnis haben die Stege 3 noch eine um ca. 30% größere maximale Dicke als der Bohrerkern.

Das Querschnittprofil der Spannuten ist damit nahezu linsenförmig, abgesehen von der konvexen Ausbauchung der Fläche 6 der Nut 2.

Die in dem dargestellten Ausführungsbeispiel von den beiden Spannuten 2 beanspruchte Querschnittfläche liegt im Bereich zwischen 50% und 55 %, konkret bei etwa 52% der gesamten, kreisförmigen Querschnittfläche des Bohrers.

Die beiden tiefsten Punkte P des Nutgrundes, deren Abstand auch den Kerndurchmeser d des Bohrers definiert, definieren gleichzeitig auch die (mit den Spannuten 2 spiralförmig umlaufende) Trennungslinie zwischen der ersten konkaven Fläche 5 und der zweiten, teils konkaven und teils konvexen Fläche 6 der Spannuten. Entsprechend dem Kerndurchmesser von 30% beträgt die Nuttiefe T auf beiden Seiten des Kernes je etwa 35% des Bohrerdurchmessers.

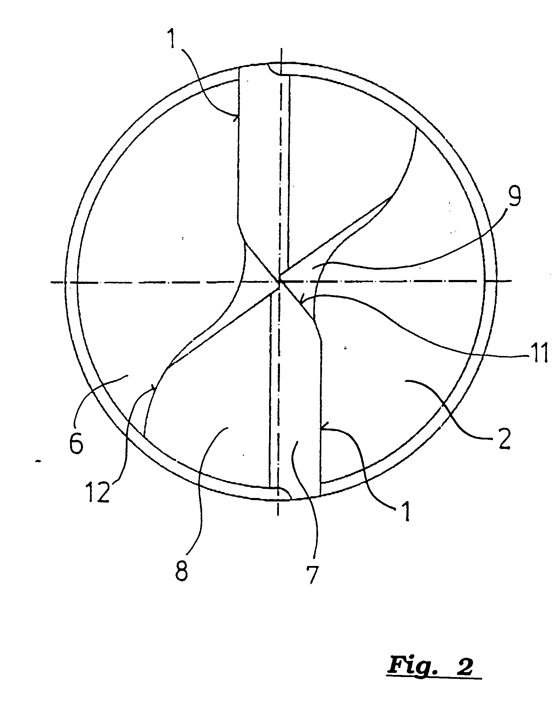

Die Stirnansicht der Figur 2 unterscheidet sich nur geringfügig von der Querschnittsansicht gemäß Figur 1. Insbesondere erkennt man in Figur 2 die Hauptschneiden an der Spitze des Bohrers, die jeweils aus einem äußeren Hauptschneidenabschnitt 1 und einem inneren Hauptschneidenabschnitt 11 bestehen, der gegenüber dem äußeren Abschnitt 1 zweifach konvex zum Zentrum des Bohrers hin abgewinkelt ist. Diese inneren Abschnitte entstehen (anstelle einer Querschneide) durch sogenannte Ausspitzungen 9, d.h. einen Ausschliff des Bohrerkerns an der Bohrerspitze. An den Hauptschneidenabschnitt 1 schließt sich auf der in Figur 2 nicht sichtbaren Seite die Spanfläche an, die durch das Ende der konkaven Fläche 5 der Spannut 2 gebildet wird. Die auf der anderen Seite der Schneide 1 sichtbare Fläche 7 ist die sogenannte Freifläche, an die nochmals axial nach hinten abgewinkelt die Fläche 8 anschließt, die dann entlang der Kante 12 in die teilweise konvexe Fläche 6 der Spannut 2 übergeht.

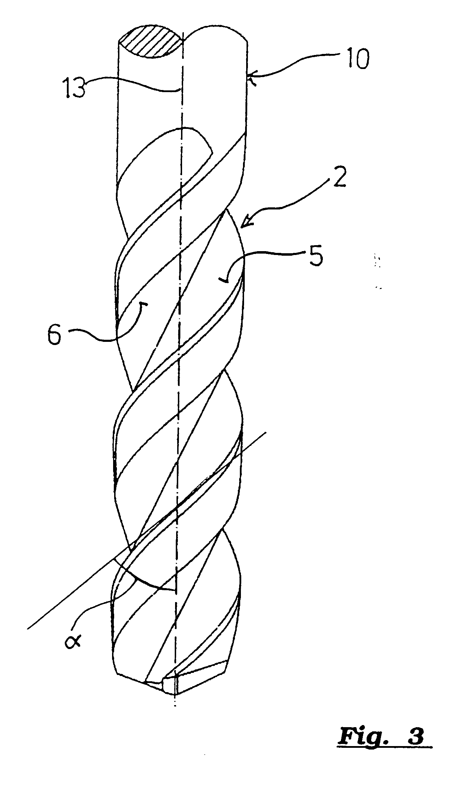

In der Seitenansicht gemäß Figur 3 erkennt man den relativ großen und für Vollhartmetallbohrer bisher nicht üblichen Drallwinkel α, der in dem dargestellten Ausführungsbeispiel allerdings übertrieben dargestellt ist und in der Realität vorzugsweise etwa 40° beträgt. Der Drallwinkel α wird gemessen entweder als Winkel zwischen einer Tangente an die äußerste Kante einer Spannut 2 bzw. deren Fläche 5 und einer Parallelen zur Bohrerachse, oder in einer entsprechenden Abwicklung der Hüllfläche des Bohrers, wobei in einer solchen Abwicklung die betreffende Kante der Spannut als mit der Steigung der erwähnten Tangente verlaufende Gerade erscheint. Der Schaft 10 des Bohrers hat im wesentlichen denselben Durchmesser wie der anschließende gewendelte Teil, kann aber einer Maschinenaufnahme entsprechend auch mit anderem Durchmesser oder nicht zylindrischem Querschnitt hergestellt sein.

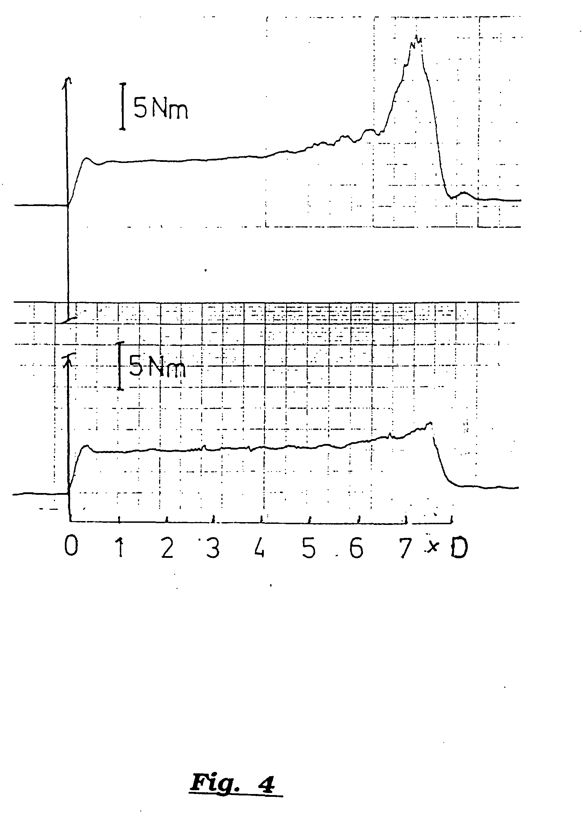

In Figur 4 sind die Ergebnisse eines Bohrversuchs wiedergegeben, wobei entlang der vertikalen Achse die an der Bohrmaschinenwelle bzw. -spindel auftretenden Drehmomente aufgetragen sind, die sich aus den beim Bohren auftretenden Reaktionskräften ergeben und wobei entlang der horizontalen Achse die jeweils erreichte Bohrtiefe wiedergegeben ist, wobei ein Bohrer mit einem Durchmesser von 8,5 mm verwendet wurde und die maximale Bohrtiefe etwa das 7,5-fache (64 mm) des Bohrerdurchmessers betrug. Die Umfangsgeschwindigkeit des Bohrers betrug dabei etwa 70 m/min und der Vorschub wurde mit 0,16 mm pro Umdrehung gewählt. Beide Bohrversuche gemäß Figur 4 wurden unter Zuhilfenahme eines Spülmittels in Form einer Wasser-Öl-Emulsion (sogenannte Bohrflüssigkeit) durchgeführt, die während des Bohrens von einer seitlich neben dem Bohrer angeordneten Düse in das Bohrloch eingespritzt wurde. Dies entspricht der konventionellen und am weitesten verbreiteten Bohrtechnik.

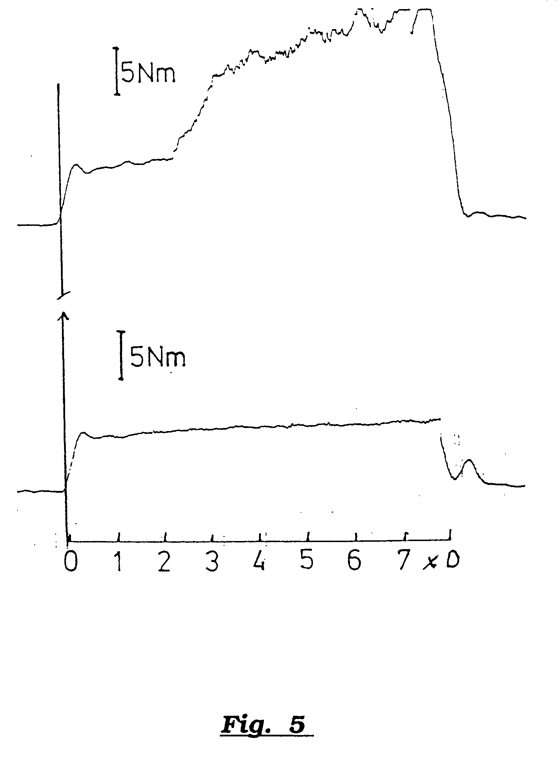

Im oberen Bildteil sind die bei einem konventionellen Vollhartmetallbohrer auftretenden Drehmomente über der Bohrtiefe wiedergegeben, der untere Bildteil zeigt die Ergebnisse für den erfindungsgemäßen Bohrer, wie er beispielhaft in den Figuren 1 bis 3 dargestellt ist. Man erkennt deutlich eine starke Zunahme des Drehmomentes bei dem konventionellen Bohrer ab einer Bohrtiefe, die dem 5- bis 6-fachen des Bohrerdurchmessers entspricht. Der Werkstoff, der in diesem Fall verwendet wurde, war ein sogenannter C 45-Stahl. Bei anderen Werkstoffen, wie zum Beispiel St 37 oder dem Werkzeugstahl mit der Bezeichnung 55 NiCrMoV6G, beginnt der unruhige Drehmomentverlauf schon bei einer Bohrtiefe, die weniger als dem 4-fachen des Bohrerdurchmessers entspricht. Dagegen bleibt das (jeweils im unteren Bildteil der Figuren 4 und 5 dargestellte) Drehmoment bei Verwendung des erfindungsgemäßen Bohrers in allen untersuchten Fällen nahezu konstant und zeigt nur einen geringfügigen Anstieg, wobei außerdem zu beachten ist, daß der unruhige Bohrverlauf, den die konventionellen Vollhartmetallbohrer bei größeren Bobrtiefen zeigen, tatsächlich sehr hohe Drehmomentspitzen enthält, die nur sehr kurzzeitig auftreten und deshalb in dem Versuchsdiagramm nicht erscheinen, die jedoch den Bohrer ganz erheblich belasten, so daß es in der Praxis bei größeren Bohrtiefen häufig zum Bruch derartiger Bohrer kommt bzw. diese für größere Bohrtiefen nicht verwendet werden.

Figur 5 zeigt das Ergebnis eines Bohrvergleichstestes ohne Verwendung eines Spülmittels (sogenanntes "trockenes" Bohren), wobei mit Ausnahme des Fortlassens der Bohrflüssigkeit alle anderen Bedingungen einschließlich des gebohrten Werkstoffes mit den oben geschilderten Versuchsbedingungen zu Figur 4 identisch übereinstimmten. Aus diesem Vergleichstest wird die Überlegenheit des erfindungsgemäßen Bohrers vor allem beim trockenen Bohren sehr deutlich. Dies erschließt für das bisher für Industriebohrverfahren bisher nur ausnahmsweise für möglich gehaltenene, "trockene Bohren" einen neuen, weiten Anwendungsbereich, der künftig von den Anwendern bevorzugt werden dürfte, weil bei dem bisher üblichen Naßbohren die Reinigung der Maschinen und die Entsorgung der verunreinigten Bohrflüssigkeit zusätzlichen Aufwand und zusätzliche Kosten verursachen, wobei außerdem anstelle von Maschinen mit interner Spülmittelzufuhr, aufwendig, teuer und störanfällig sind, einfachere, preiswertere und robustere Bohr- bzw Werkzeugmaschinen verwendet werden können.

## Patentansprüche

1. Vollhartmetallbohrer mit mindestens zwei Schneiden (1) und mindestens zwei Spannuten (2), die durch Stege (3) voneinander getrennt sind, an deren Vorderende die Schneiden (1) angeordnet sind, und mit einem durch den Bohrerdurchmesser (D) und die radiale Spannuttiefe (T) definierten Bohrerkern (4), wobei der Nutquerschnitt der Spannuten (2) zusammen mehr als 45% des gesamten Bohrerquerschnitts beträgt und wobei Nutgrund und Nutwände der Spannuten (2) eine erste, in einem Schnitt senkrecht zur Bohrerachse konkave Fläche (5) und eine zweite, in einem Schnitt senkrecht zur Bohrerachse mindestens teilweise konvexe Fläche (6) aufweisen, wobei eine gedachte Trennungslinie zwischen diesen beiden Flächen (5, 6) entlang des tiefsten Punktes (P) des Nutgrundes verläuft, wobei die konkave Fläche (5) an die Spanfläche der zugehörigen Schneide (1) anschließt und die teilweise konvexe Fläche (6) an die Freifläche einer Bohrerschneide (1) anschließt, **dadurch gekennzeichnet, daß** der minimale Krümmungsradius der konkaven Fläche mehr als 80% des Bohrradius beträgt.

2. Vollhartmetallbohrer nach Anspruch 1, dadurch gekennzeichnet, daß der konvexe Teil der zweiten Fläche (6) sich über mindestens die Hälfte, vorzugsweise über mehr als 60% der in einem Schnitt senkrecht zur Bohrerachse gemessenen Länge dieser zweiten Fläche (6) erstreckt.

3. Vollhartmetallbohrer nach Anspruch 1 oder 2, dadurch gekennzeichnet, daß der Krümmungsradius der konkaven Fläche (5) im Mittel größer als der Bohrerradius (R) ist.

4. Vollhartmetallbohrer nach einem der Ansprüche 1 bis 3, dadurch gekennzeichnet, daß der Durchmesser des Bohrerkerns etwa 30% des Bohrerdurchmessers beträgt.

5. Vollhartmetallbohrer nach einem der Ansprüche 1 bis 4, dadurch gekennzeichnet, daß der Nutquerschnitt aller Spannuten zusammen zwischen 50 und 55% des gesamten Bohrerquerschnittes liegt.

6. Vollhartmetallbohrer nach einem der Ansprüche 1 bis 5, dadurch gekennzeichnet, daß der Drallwinkel (α) der Spannuten (2) mehr als 30° beträgt.

7. Vollhartmetallbohrer nach Anspruch 6, dadurch gekennzeichnet, daß der Drallwinkel der Spannuten zwischen 35° und 55°, und insbesondere zwischen 40° und 50° liegt.

8. Vollhartmetallbohrer nach einem der Ansprüche 1 bis 7, dadurch gekennzeichnet, daß der Öffnungswinkel (β) der Spannuten (2) mindestens 100° beträgt.

9. Vollhartmetallbohrer nach Anspruch 8, dadurch gekennzeichnet, daß der Öffnungswinkel (β) der Spannuten (2) mindestens 110° beträgt und vorzugsweise zwischen 120°und 135° liegt.

10. Vollhartmetallbohrer nach einem der Ansprüche 1 bis 9, dadurch gekennzeichnet, daß die zweite Fläche sowohl in ihrem konvexen als auch in ihrem konkaven Abschnitt kleinere Krümmungsradien aufweist als die erste konkave Fläche (5).

11. Vollhartmetallbohrer nach einem der Ansprüche 1 bis 10, dadurch gekennzeichnet, daß er aus einem gesinterten Pulvermaterial besteht, wobei die mittlere Korngröße des verwendeten Pulvers weniger als 1,5 µm, vorzugsweise weniger als 1 µm und insbesondere weniger als 0,7 µm beträgt.

12. Vollhartmetallbohrer nach einem der Ansprüche 1 bis 11, dadurch gekennzeichnet, daß das Verhältnis des Krümmungsradius des konkaven Abschnittes der zweiten, teilweise konvexen Fläche (6) zum Krümmungsradius der ersten, konkaven Fläche (5), jeweils gemessen in einer Ebene senkrecht zur Bohrerachse (13), weniger als 1/4, vorzugsweise weniger als 1/5 und insbesondere etwa 1/6 beträgt.

## Claims

1. A full hard metal drill having at least two cutting edges (1) and at least two chip flutes (2) which are separated from each other by lands (3), at the front end of which are arranged the cutting edges (1), and a drill core (4) defined by the drill diameter (D) and the radial chip flute depth (T), wherein the flute cross-section of the chip flutes (2) together amounts to more than 45% of the total drill cross-section and wherein the bottom and the walls of the chip flutes (2) have a first surface (5) which is concave in a section perpendicularly to the axis of the drill and a second surface (6) which is at least partially convex in a section perpendicularly to the axis of the drill, wherein a notional separation line between said two surfaces (5, 6) extends along the deepest point (P) of the bottom of the flute, and wherein the concave surface (5) adjoins the chip surface of the associated cutting edge (1) and the partially convex surface (6) adjoins the free surface of a drill cutting edge (1), characterised in that the minimum radius of curvature of the concave surface is more than 80% of the drilling radius.

2. A full hard metal drill according to claim 1 characterised in that the convex part of the second surface (6) extends over at least half and preferably over more than 60% of the length of said second surface (6), as measured in a section perpendicularly to the axis of the drill.

3. A full hard metal drill according to claim 1 or claim 2 characterised in that the radius of curvature of the concave surface (5) is on average greater than the drill radius (R).

4. A full hard metal drill according to one of claims 1 to 3 characterised in that the diameter of the drill core is about 30% of the drill diameter.

5. A full hard metal drill according to one of claims 1 to 4 characterised in that the flute cross-section of all chip flutes is together between 50 and 55% of the overall drill cross-section.

6. A full hard metal drill according to one of claims 1 to 5 characterised in that the twist angle (α) of the chip flutes (2) is more than 30°.

7. A full hard metal drill according to claim 6 characterised in that the twist angle of the chip flutes is between 35° and 45° and in particular between 40° and 50°.

8. A full hard metal drill according to one of claims 1 to 7 characterised in that the angle of opening (β) of the chip flutes (2) is at least 100°.

9. A full hard metal drill according to claim 8 characterised in that the angle of opening (β) of the chip flutes (2) is at least 110° and preferably between 120° and 135°.

10. A full hard metal drill according to one of claims 1 to 9 characterised in that the second surface both in its convex and also in its concave portion has smaller radii of curvature than the first concave surface (5).

11. A full hard metal drill according to one of claims 1 to 10 characterised in that it comprises a sintered powder material, wherein the mean grain size of the powder used is less than 1.5 µm, preferably less than 1 µm and in particular less than 0.7 µm.

12. A full hard metal drill according to one of claims 1 to 11 characterised in that the ratio of the radius of curvature of the concave portion of the second, partially convex surface (6) to the radius of curvature of the first, concave surface (5), measured in each case in a plane perpendicular to the axis (13) of the drill, is less than 1/4, preferably less than 1/5 and in particular about 1/6.

## Revendications

1. Foret entièrement en métal dur, comportant au moins deux tranchants (1) et au moins deux rainures à copeaux (2), qui sont séparées l'une de l'autre par des filets saillants (3), aux extrémités frontales desquels sont situés les tranchants (1), ainsi qu'un corps central de foret (4) défini par le diamètre (D) du foret et la profondeur radiale (T) des rainures à copeaux, la section transversale des rainures à copeaux (2) constituant globalement plus de 45% de la section transversale d'ensemble du foret et le fond et les parois des rainures à copeaux (2) présentant une première surface (5), concave dans un plan de coupe perpendiculaire à l'axe du foret, et une seconde surface (6) convexe, au moins partiellement, dans un plan de coupe perpendiculaire à l'axe du foret, une ligne de séparation imaginaire entre ces deux surfaces (5, 6) s'étendant le long du point (P) de plus grande profondeur du fond des rainures, la surface concave (5) se rattachant alors à la surface d'évacuation des copeaux du tranchant correspondant (1) et la surface partiellement convexe (6), à la surface libre d'un tranchant (1) du foret, caractérisé en ce que le rayon de courbure minimal de la surface concave représente plus de 80% du rayon du foret.

2. Foret entièrement en métal dur selon la revendication 1, caractérisé en ce que la partie convexe de la seconde surface (6) s'étend sur au moins la moitié, de préférence sur plus de 60%, de la longueur de cette seconde surface (6), mesurée dans un plan de coupe perpendiculaire à l'axe du foret.

3. Foret entièrement en métal dur selon la revendication 1 ou 2, caractérisé en ce que le rayon de courbure de la surface concave (5) est en moyenne plus grand que le rayon (R) du foret.

4. Foret entièrement en métal dur selon l'une des revendications 1 à 3, caractérisé en ce que le diamètre du corps central du foret est à peu près égal à 30% du diamètre du foret.

5. Foret entièrement en métal dur selon l'une des revendications 1 à 4, caractérisé en ce que la section transversale globale de toutes les rainures à copeaux se situe entre 50 et 55% de la section transversale d'ensemble du foret.

6. Foret entièrement en métal dur selon l'une des revendications 1 à 5, caractérisé en ce que l'angle d'inclinaison (α) des rainures à copeaux (2) est de plus de 30°.

7. Foret entièrement en métal dur selon la revendication 6, caractérisé en ce que l'angle d'inclinaison des rainures à copeaux se situe entre 35° et 55° et, en particulier, entre 40° et 50°.

8. Foret entièrement en métal dur selon l'une des revendications 1 à 7, caractérisé en ce que l'angle d'ouverture (β) des rainures à copeaux (2) est d'au moins 100°.

9. Foret entièrement en métal dur selon la revendication 8, caractérisé en ce que l'angle d'ouverture (β) des rainures à copeaux (2) est d'au moins 110° et se situe, de préférence, entre 120° et 135°.

10. Foret entièrement en métal dur selon l'une des revendications 1 à 9, caractérisé en ce que la seconde surface, aussi bien dans sa section convexe que dans sa section concave, présente des rayons de courbure plus petits que celui de la première surface concave (5).

11. Foret entièrement en métal dur selon l'une des revendications 1 à 10, caractérisé en ce qu'il est constitué d'un matériau en poudre fritté, la granulométrie moyenne de la poudre employée étant de moins de 1,5 µm, de préférence de moins de 1 µm et, en particulier, de moins de 0,7 µm.

12. Foret entièrement en métal dur selon l'une des revendications 1 à 11, caractérisé en ce que le rapport du rayon de courbure de la section concave de la seconde surface partiellement convexe (6) au rayon de courbure de la première surface concave (5), chacun mesuré dans un plan perpendiculaire à l'axe (13) du foret, est de moins de 1/4, de préférence de moins de 1/5 et, en particulier, d'environ 1/6.
